# DEMANDE DE BREVET EUROPEEN

(11) **EP 2 317 673 A1**
(43) Date de publication de la demande: **04.05.2011**
(21) Numéro de dépôt: 09306034.1
(22) Date de dépôt: 29.10.2009
(51) Int. Cl.: H04H 20/61, H04H 60/16

(54) **Communication radiofréquence contrôlée par microcircuit**

(71) Demandeur: Gemalto SA, 92190 Meudon (FR)
(72) Inventeur: Leroy, Pascal, 60870, RIEUX (FR); Leibenguth, Joseph, 92210, SAINT - CLOUD (FR)

(57) **Abrégé**

L'invention concerne un procédé de communication radiofréquence de données, dans lequel la réception et/ou l'accès à ces données est contrôlée par des moyens de contrôle comprenant un microcircuit électronique en fonction de droits d'accès;

Le procédé se distingue en ce que
- les données transmises comprennent une information temporelle (IT) et/ou relative à un événement (IE),
- et en ce que les droits d'accès (Da) sont contrôlés en fonction de cette information temporelle et/ou relative à un événement.

L'invention concerne également, un dispositif de contrôle de droit d'accès ainsi qu'un dispositif de réception radiofréquence le comportant.

## Description

La présente invention concerne un procédé, système et dispositif de contrôle de la réception radiofréquence de flux de données par microcircuit.

Plus particulièrement, elle concerne des dispositifs de réception radiofréquence comprenant des moyens de contrôle de la réception par microcircuit, notamment une carte à puce comportant des droits d'utilisation. Les flux de données sont diffusés, de préférence par radiodiffusion, à destination d'un ensemble de dispositifs comportant des droits d'utilisation.

La demande de brevet EP1627347 décrit une radio contrôlée par carte à puce; La carte associée comprend des données stockées dans la puce relatives à des fréquences et durées de fonctionnement (temps de fonctionnement autorisé). Le système composé du lecteur et carte associée, est destiné à être utilisé à l'occasion d'évènements sportifs, culturel, religieux ou autres événements et à fournir aux utilisateurs de l'information et du divertissement. La radio ne peut fonctionner sans la carte à puce qui insérée dans le lecteur sélectionne les fréquences programmées pour une durée prédéfinie.

Le système actuel souffre d'un certain nombre de limitations; Il est seulement capable de décrémenter la durée de fonctionnement. Dès lors que la carte à puce est introduite dans le dispositif (lecteur / radio à carte), la bonne fréquence est activée et si opérationnelle, la durée de l'opération est décrémentée. Le dispositif ne fait pas de différence entre le temps de présence de la carte dans le lecteur par omission et le temps d'usage normal du dispositif pendant l'événement.

Le dispositif ne présente pas de valeurs d'usage adapté aux besoins actuels identifiés par l'inventeur en termes de fonctionnalités de communication ou de connectivité. En particulier, il n'est pas en mesure de sélectionner automatiquement la fréquence plus appropriée si plusieurs fréquences sont programmées. D'autre part, le dispositif peut décrémenter des droits alors que les conditions de réception ne sont pas optimales ou l'endroit de réception ou l'heure inappropriés. L'utilisateur a alors l'impression de ne pas avoir obtenu le bon service et d'avoir été débité injustement.

L'invention a l'intention de résoudre tous ces inconvénients. L'invention a également pour objectif d'apporter d'autres fonctionnalités ou applications correspondant à des besoins ressentis d'utilisateurs.

L'invention consiste notamment dans l'agencement dans la carte à puce et/ou le lecteur de moyens de réception de type RDS, pour recevoir des données comportant des indicateurs d'information de durée, temporelles et/ou d'évènements et d'exploiter ces informations dans le dispositif de manière plus efficace ou plus juste ou à bon escient. De préférence, le dispositif permet de recevoir des informations complémentaires. Ces informations complémentaires peuvent être collectées par ailleurs à d'autres instants ou sur le vif et /ou d'autres interfaces.

L'exploitation de ces informations peut être à différentes fins. En particulier, elle permet d'éviter des erreurs de décompte de droit grâce à un diagnostic interne des conditions d'écoute telles que le lieu, l'instant ou l'objet de l'émission.

A cet effet, l'invention concerne un procédé de communication radiofréquence de données, dans lequel la réception et/ou l'accès à ces données est contrôlée par des moyens de contrôle comprenant un microcircuit électronique en fonction de droits d'accès;

Le procédé se distingue en ce que les données transmises comprennent une information temporelle et/ou relative à un événement, et en ce que les droits d'accès sont contrôlés en fonction de cette information temporelle et/ou relative à un événement.

Selon d'autres caractéristiques du procédé:
- Il comprend une étape de chargement d'information complémentaire liée aux données à recevoir;
- Le chargement d'information complémentaire s'effectue par une interface de courte ou moyenne portée;
- L'information complémentaire comprend une indication de localisation d'un lieu de chargement et/ou une indication de fréquence de manière à recevoir des données relatives au lieu;
- L'information complémentaire chargée comprend un plan du lieu;
- L'information complémentaire chargée comprend des points de bonus, gratifications ou équivalents et/ou déclenche d'autres droits d'accès;
- Le contrôle comprend la mise en oeuvre d'au moins une étape ou programme de vérification des conditions de la réception par un test d'adéquation entre eux, de certains paramètres relatifs à des données à recevoir, notamment, l'horaire, l'endroit, la fréquence;
- Le contrôle déclenche ensuite un message d'erreur suite au diagnostic permettant à l'utilisateur de se placer dans de conditions optimales de réception. En particulier, le contrôle met en oeuvre une étape d'anticipation automatique de l'horaire de l'émission à laquelle un utilisateur a souscrit pour le prévenir à l'avance d'un message ou alerte adéquate. Le cas échéant, couplé à un système GPS, le dispositif peut calculer le trajet et le temps nécessaire pour assister à l'événement dans les temps; ceci nécessite éventuellement un afficheur dans/sur le lecteur radio et peut concerner des applications de guidage touristiques.
- Le cas échéant, le dispositif couplé à un système GPS calcule l'endroit de présence et émet un message d'erreur au cas ou l'endroit détecté est erroné par rapport à l'endroit de l'événement ou de réception optimisé d'une fréquence.

L'invention a également pour objet un dispositif de contrôle de réception radiofréquence de données comprenant des moyens de contrôle de la réception et/ou l'accès à ces données en fonction de droits d'accès, lesdits moyens de contrôle comprenant un microcircuit électronique;

Le dispositif de contrôle se distingue en ce que les données à contrôler comprennent une information temporelle et/ou relative à un événement, et en ce que lesdits moyens de contrôle des droits d'accès autorisent l'accès aux données par un utilisateur en se référant à cette information temporelle et/ou relative à un événement.

Elle a également pour objet un système ou un dispositif de réception de données radiofréquences comportant le dispositif de contrôle ci-dessus et/ou apte à mettre en oeuvre le procédé susvisé.

D'autres particularités et avantages de l'invention apparaîtront à la lecture de la description, faite à titre d'exemple non limitatif et en regard des dessins annexés sur lesquels :
- La figure 1 illustre un système d'émission / réception radiofréquence de données conforme à un mode général de l'invention;
- Les figures 2 et 3 illustrent des informations temporelles et événementielles véhiculées dans le flux de données émis par une borne émettrice et destiné aux dispositifs conformes à l'invention;
- La figure 4 illustre des étapes d'un procédé de réception radiofréquence de données conforme à un mode de mise en oeuvre de l'invention.
- La figure 5 illustre une étape 130bis, alternative ou additionnelle à l'étape 130 en relation avec la figure précédente, d'un autre mode de mise en oeuvre de l'invention.
- La figure 6 illustre un chargement d'applications dans le microcircuit 7 d'une carte à puce 7a, notamment application de test ou de diagnostic P3 ou de droit d'accès Da.

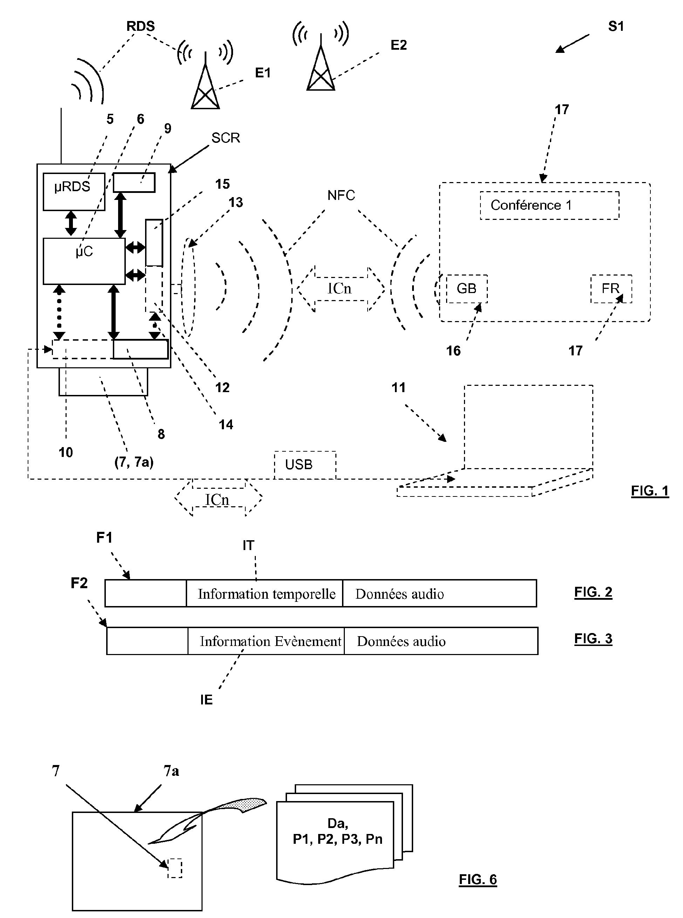

A la figure 1, l'invention prévoit un système de radio diffusion S1 comportant un ou plusieurs émetteur(s) radiofréquence(s) E1, E2 ainsi qu'un ou plusieurs(s) dispositif(s) de réception radiofréquence SCR; Le système est ici un système de type RDS comme décrit plus amplement ci-dessous. Le cas échéant, tout système de radiodiffusion ou télédiffusion apte à véhiculer des données temporelles ou événementielles à destination d'un ensemble de récepteurs peut convenir à résoudre le problème posé. Le système concerne de préférence les systèmes de diffusion de données à un ensemble de récepteurs mais peut concerner le système téléphonique à destination d'un seul abonné, notamment pour la mise en oeuvre de l'étape 130bis.

Pour l'instant le dispositif dans l'exemple est analogique et les seules données numériques possibles seraient sur le signal RDS. Le RDS n'existe pas dans le monde numérique. Avec le RDS, il sera difficile de passer des données type audio ou video, car le débit n'est pas assez important.

Cependant, le recours à une porteuse numérique, comme dans la radio numérique Sirius XM Radio aux USA, pourrait permettre de véhiculer en plus des informations temporelles et évènementielles, des numéros de cartes ou des noms d'abonné à invalider pour notamment provoquer un arrêt du service par manque de paiement de la souscription. Mais aussi d'une manière plus positive, une participation à un évènement et/ou une écoute active détectées, pourraient donner lieu à l'écriture dans la carte de points de fidélités.

Les données sont émises par ondes radiofréquences et captées par le récepteur conforme à l'invention. Les données comprennent dans l'exemple tout type de données ou flux de données audio, vidéo.... Dans l'exemple, les données comprennent notamment une émission sportive audio en direct ou une conférence en plusieurs langues.

Chaque récepteur SCR comprend de manière connu des moyens radiofréquences de réception de données 5, comportant ici dans l'exemple une puce (µRDS) comprenant une fonctionnalité RDS et des moyens de contrôle de la réception et/ou de droits d'accès à ces données 6, 7, 7a. Ces moyens de contrôle comprennent dans l'exemple, une puce de circuit intégré 7 tel qu'une puce de carte à puce 7a. Ces moyens de contrôle peuvent comprendre un microcontrôleur (µC, 6) pour gérer notamment les interfaces et périphériques. La puce µRDS peut être reliée de préférence au microcontrôleur (µC, 6) et /ou à la puce de circuit intégré 7. La puce 7 peut être sur un support portable amovible, tel une carte, connecté au dispositif SCR ou fixé à demeure sur un PCB du dispositif SCR.

Selon un mode de mise en oeuvre, le flux complet de données diffusé par canal radio conforme à un format et protocole spécifique peut transiter de préférence de la puce radio vers la puce d'interface.

Le système de diffusion radio va émettre en analogique ou numérique un flux audio et si nécessaire (pour une émission analogique) utiliser le canal numérique RDS pour transmettre des données numériques spécifiques à l'évènement ou au porteur de la carte. Ces données numériques sont capturées par la puce radio et transmisses par la puce radio à la puce (type carte à puce) pour être interprétées. La puce (type carte à puce) en retour pilotera la puce radio sur la bonne fréquence de réception et actualiser les droits du porteur.

Le microcontrôleur 6 (µC) dans l'exemple gère les échanges entre la puce µRDS et la puce 7 de contrôle de droits via des interfaces adaptés. Dans l'exemple, la puce radio µRDS est connectée par une liaison série ou 12C à une puce d'interface ou un contrôleur d'interface 6 de puce de circuit intégré 7. Par exemple, des signaux marche (ON) et arrêt (OFF) respectivement pour le son et la fréquence à sélectionner si ON, signaux d'échange standards, sont échangées de la puce d'interface 6 vers la puce radio µRDS;

La carte à puce 7a (ou puce de circuit intégré 7) va ensuite considérer des données capturées par la puce RDS notamment la fréquence, lieu, horaire, avec le cas échéant d'autres critères obtenus par ailleurs (localisation, identifiants, droits supplémentaires gagnés, bonnes réponses à un jeu...) et décider de l'action, effectuant ainsi un contrôle total intelligent et amélioré de la radio RDS.

Des périphériques ou interfaces de type connus comme ci-après peuvent être prévus séparément, cumulativement ou selon différentes combinaisons possibles. Ainsi, le dispositif peut comprendre une ou plusieurs interfaces ISO 7816 et/ou USB avec une puce de carte à puce, une puce de type NFC, une interface audio, un micro, un haut-parleur, un connecteur audio pour casque audio ou oreillette, un afficheur ou écran vidéo tactile ou non, un microcontrôleur graphique, un clavier à touche sensitive ou non, toute interface ou moyens de type connus nécessaires pour réaliser une interface de type homme / machine (IHM).

Alternativement, une puce ou une carte de type PCMCIA ou "Express Card", clés USB ou autre carte, objet ayant des moyens de stockage de droits d'accès, de préférence sécurisés, peut être envisagé par l'invention.

Conformément à un mode de réalisation de l'invention, le système S1 prévoit un ou plusieurs moyens émetteurs et/ou relais E1, E2 adaptés pour insérer ou mixer une information temporelle IT et/ou information relative à un événement IE, dans le flux de données diffusé (F1, F2 aux figures 2, 3) ou toute autre information destinée à être exploitée / traitée par la puce pour notamment établir un diagnostic et entreprendre une action en conséquence, notamment de décompte de droits.

D'autre part, le dispositif SCR prévoit que les moyens de contrôle de la réception, des droits d'accès ou de l'accès à ces données, mentionnés précédemment, autorisent l'accès et/ou la réception de données en fonction de cette information temporelle et/ou en fonction d'un événement reçu. L'information temporelle peut être par exemple, l'heure, la date.

Pour l'information temporelle, l'invention utilise de préférence la fonction CT ou la fonction PS décrites ci-dessous et spécifiques au système RDS pour faire passer une information au récepteur lui permettant, par exemple, de régler une horloge interne. L'horloge peut être celle du dispositif lecteur SCR ou le cas échéant celle de la puce de contrôle de la carte à puce.

Le rafraichissement de l'horloge pouvant intervenir régulièrement de part le dispositif RDS, il sera possible soit pour le chip SCR soit pour le chip carte à puce d'avoir une horloge plus ou moins précise ; Cela permet en quelque sorte une récupération d'horloge (clock recovery) par le RDS et l'horloge interne du dispositif SCR avec la puce (de carte à puce) n'a pas besoin d'être très précis.

Le cas échéant, les données peuvent être diffusées selon différentes fréquences et une fonction AF décrite ci-dessous de suivi de fréquence peut être mise en oeuvre par le dispositif.

### Fonctionnalités de services du RDS utilisées ensemble ou non par l'invention selon un exemple de réalisation:

PS (Program Service) : il permet l'affichage du nom de la station reçue sur un écran d'un dispositif. Ce service peut être détourné pour y faire passer des informations dynamiques.
- CT (clock time): il permet la transmission de l'heure, et donc le réglage de l'horloge du récepteur. En principe, l'horloge est radio pilotée sur l'émetteur DCF77 de Francfort en Allemagne) ;
- AF (Alternative Frequencies) : les émetteurs diffusent la liste des fréquences des émetteurs voisins de la même station. Les autoradios peuvent ainsi à tout moment chercher la meilleure fréquence disponible. C'est ainsi que l'on peut écouter la même station d'un bout à l'autre du pays sans changer de fréquence manuellement (les fréquences sont « téléchargées » dans la mémoire vive de l'autoradio) ;
- RT (Radio Text) : ce service permet la diffusion de textes par l'intermédiaire du RDS. Les textes en question peuvent alors s'afficher à la demande sur l'écran des récepteurs;
- PI (Program Indentification) : le code PI est un code unique attribué à chaque radio, qui permet aux récepteurs de l'identifier à coup sûr ;

Dans d'autres utilisations, le système RDS peut transmettre d'autres types d'informations, comme des données de service propres à chaque radio, ou même des images.

Selon une mise en oeuvre possible, un flux de données numériques adapté est capturé par la fonctionnalité RDS de la puce radio µRDS (5); La puce radio 5 communique ensuite au microcontrôleur 6 ces données qui sont relayées au moins en partie à la puce 7 de carte à puce, le microcontrôleur servant de puce d'interface avec la puce 7 dite de contrôle ou de sécurité. Le microcontrôleur communique avec la puce 7 via une interface physique et/ou logique 8 de type ISO 7816. Ce sont au moins les données utiles à la puce 7 pour établir le contrôle qui sont relayées à la puce 7. Pour cela, les informations utiles peuvent être extraites par le microcontrôleur 6 et transmises à la puce 7 tandis que les données relatives à l'émission audio / vidéo sont par exemple stockées en mémoire tampon, le temps de faire le traitement par la puce 7.

Le cas échéant, l'émission diffusée est partielle, la carte comportant une partie complémentaire; De manière à être compréhensible par l'utilisateur ou pour être complète, le dispositif utilise la partie complémentaire de l'émission pré-stockée dans la puce ou mémoire annexe lors de l'écoute ou accès par l'utilisateur, par exemple la bande son d'une émission vidéo. Cette disposition permet d'avoir une diffusion pseudo cryptée : par exemple, avec saut à une fréquence différente d'une manière aléatoire sur base de temps ; le système RDS informe du saut à T0 + x secondes pour permettre de changer au bon moment automatiquement la fréquence.

La puce 7 de circuit intégré comprend des moyens de contrôle aptes à procéder ensuite à une vérification et/ou gestion des droits (Da); La puce comprend par exemple, de manière classique un microcontrôleur et des mémoires volatiles et non volatiles. Les droits peuvent être de différentes natures. Dans l'exemple, ils permettent notamment d'accéder à un stade sportif, d'écouter sur une fréquence spécifique un contenu, de vérifier la validité de la carte, de choisir la de fréquence la plus appropriée, etc.). Les droits 'Da) peuvent être sous forme d'unités dans un compteur ou équivalent.

La puce de contrôle 7 comporte également des moyens de test (P1, P2, P3,... Pn) permettant également d'éviter de décompter des unités de la carte à puce si aucune fréquence n'est disponible ou si le lecteur n'est pas utilisé dans la zone appropriée ou si le lecteur et la carte ne sont pas utilisés pour les événements et/ou dans un créneau d'heure et/ou de calendrier correspondants.

Des tables correspondantes stockées dans la puce et des indications fournies par le dispositif permettent à la puce de déclencher ou non un signal d'autorisation. Des tables de droits ou de tarifications selon l'horaire peuvent être prévues. Des signaux d'absence de fréquence disponible peuvent être transmis par la puce µRDS au microcontrôleur 6 puis à la puce de contrôle. Cela permet d'éviter un décompte par exemple si la fréquence sélectionnée n'est pas disponible ou de mauvaise qualité.

De même, la puce de contrôle peut déduire une localisation erronée afin de ne pas déduire des unités. Par exemple, le dispositif capte plusieurs fréquences mais la salle de conférence n'est pas la bonne. Une information de localisation peut être captée notamment par la puce de contrôle par une interaction avec un émetteur local par exemple un tag (étiquette électronique), une borne sans-contact, un lecteur disposé dans un endroit destiné à la réception. La puce de contrôle établit par exemple un test ou un diagnostic afin de vérifier que toutes les conditions de décompte d'unité sont réunis et procède à l'autorisation et/ou décompte.

A cet effet, la puce 7 peut comprendre dans une mémoire EEPROM ou flash au moins un programme de test P1, Pn adapté qui est exécuté par le microcontrôleur de la puce 6 au moment opportun.

La puce 7 peut comprendre des moyens (Pn) aptes à permette une surveillance d'audience (fidélité), une agrégation des données et le cas échéant une exploitation potentielle de données quand la carte à puce et/ou le dispositif est connectée à un serveur ou un lecteur externe. En effet, la puce stocke des historiques d'utilisation (ou traces) qui sont relevés tout ou en partie au cours de ces connexions avec un lecteur ou serveur externe relié à un centre d'exploitation de ces historiques.

Le dispositif peut comprendre également des moyens aptes à permettre encore une traçabilité, une géo-localisation ou au moins un contrôle par carte à puce d'une participation ou non à un événement spécifique tel que jeux et programmes de fidélisation.

Ainsi par exemple, la carte comprend des moyens pour mémoriser des données relatives à des temps d'audience et/ou fréquence utilisées, et/ou endroits d'actionnement. Ainsi par exemple, une localisation est stockée dans la puce 7 notamment par interaction avec une borne locale comportant une trace de localisation (identifiant et/ ou un nom de localisation). Cette trace peut être communiquée au dispositif par une borne sans-contact locale et transmise à la puce 7 pour stockage dans une mémoire de lieu de fréquentation avec éventuellement les horaires correspondants et date.

Inversement, ces traces ou données peuvent être relevées notamment par une interaction à un quelconque lecteur connecté ou non en réseau avec un serveur d'exploitation de données. Par exemple, l'interaction avec une borne dans un endroit d'écoute prélève un identifiant du dispositif qui est ensuite envoyé à un centre ou serveur d'exploitation pour analyse. Le cas échéant, le dispositif comporte une fonction modem GSM, GPRS et des données sont remontées directement par le dispositif à un serveur central d'exploitation de ces relevées ou historique.

Alternativement, la carte à puce 7 prend la fonction d'une carte SIM ou carte annexe et peut aussi être déplacée dans un téléphone portable par exemple, ou autre lecteur et les relevés peuvent être prélevés à cette occasion par une interaction ou connexion avec un serveur via le réseau de télécommunication mobile.

Ainsi avec ces moyens décrits ci-dessus et notamment les nouvelles fonctionnalités de la carte à puce et du dispositif, l'invention répond aux problèmes susvisés. On comprend aussi qu'en combinant astucieusement une fonction RDS dans le dispositif, l'invention permet de diffuser des informations basées sur certains événements comme le nom de l'événement, la date et l'heure de l'événement, la date et heure réelles cités de manière non limitative.

La puce radio communique ensuite ces données à la puce de carte à puce, fournissant à la carte à puce toutes les informations pertinentes pour contrôler les droits et l'instant d'écoute. Le cas échéant, c'est le contrôleur 6 lui-même qui assure ou intègre la fonction de la puce 7 ou inversement.

Aujourd'hui, dans un exemple, on utilise une puce radio qui est pilotée par une puce carte à puce par l'intermédiaire d'une puce interface sachant communiquer ISO. La carte est toujours esclave d'un microcontrôleur qui est l'arbitre du dispositif SCR pour toutes les fonctions : contrôle de la puce radio, de la puce RDS, de l'USB, des IHMs (afficheur, boutons, claviers...).

### Architecture matérielle et/ou logicielle supplémentaires :

L'invention peut comprendre de préférence une fonctionnalité d'interface duale. Elle peut être réalisée, de manière connue, soit par une carte à puce à interface duale (l'antenne étant réalisée dans la carte), soit par un microcircuit intégré à interface duale ISO/RF placé dans la carte et connecté à une antenne RF (13) comprise dans le dispositif ou reliée à lui, via notamment des contacts C4, C8 (non représentés) d'un bornier de plages de contact électrique de carte à puce standards ISO 7816, reliés à connecteur correspondant du dispositif.

Les fonctionnalités de l'interface duale permettent fondamentalement de faire un contrôle d'accès standard et des paiements sans-contact comme pour toute carte à puce à interface duale. Avantageusement, cette fonction permet également une géo-localisation lors d'un échange avec un lecteur ou une borne dont l'emplacement est connu.

La localisation peut être communiquée par le lecteur au dispositif via l'interface sans-contact; Inversement le lecteur peut collecter un identifiant du dispositif et/ou la carte à puce sans contact. Cet identifiant peut être communiqué ultérieurement à un serveur central pour suivi d'itinéraire, statistiques. En effet, pour un jeu de piste par exemple il sera demandé à l'utilisateur de placer son badge sur le lecteur sans-contact en utilisant soit la carte à puce, soit le dispositif SCR ; une double traçabilité peut en découler ; celle stockée dans la carte et celle stocké sur le serveur central.

La borne communique, (notamment par communication sans-contact), une information de localisation ou une information permettant au dispositif de se localiser; Par exemple, grâce à une liste ou une base de correspondance stockée en mémoire interne, la correspondance est effectuée par recherche d'une entrée d'une table de données qui donne en sortie une localisation; Par la suite, à partir de la localisation détectée, une fréquence appropriée correspondante peut être déclenchée ou sélectionnée automatiquement par le dispositif.

Alternativement, le dispositif peut comprendre des moyens de sélection ou de saisie d'un emplacement, d'un code représentatif d'une localisation

(clavier, IHM quelconque) utilisables directement par l'utilisateur ou autre personne autorisée.

En outre, la géo-localisation peut permettre un déclenchement automatique de la bonne fréquence pour écouter une émission, le suivi d'un jeu, d'une prise de connaissance de publicité sur un lieu de vente ou l'émission d'une publicité au bon endroit ou de vérifier l'itinéraire d'un utilisateur. Cela peut avoir un intérêt en particulier dans un musée, un jeu de piste (chasse au Trésor ou course d'orientation) et au cours d'une convention au cours de laquelle des événements ou des conférences en langues différentes se déroulent dans différents espaces (la radio étant utile pour des traductions).

Le dispositif peut comprendre un connecteur USB (10), de préférence de type B. Le connecteur peut être relié aux contacts ISO7816 de la carte à puce via une interface active USB/ISO ou directement aux plages C6 & C8 d'une carte USB de type e-Gate; Ainsi, le dispositif SCR devient un vrai lecteur de carte à puce connectable à n'importe quel périphérique maître USB. Cela permet à l'utilisateur de connecter sa carte associée au lecteur à l'ordinateur et à Internet et de charger notamment des informations, droits utilisateur ou abonnements. Le dispositif peut prévoir des moyens de sélection des échanges entre un ordinateur 11, la puce 7 et le microcontrôleur 6.

Alternativement, le dispositif peut comporter un module de téléphonie mobile pour une connexion directe internet. Le cas échéant, la puce peut comprendre un abonnement de souscription au réseau de télécommunication.

Le dispositif SCR peut comprendre une interface ou fonctionnalité NFC (12, avec antenne13) pour permettre d'émuler non seulement une carte à puce sans contact, mais aussi se présenter comme lecteur sans contact. Le lecteur NFC permet de lire toute étiquette radiofréquence ou tout transpondeur radiofréquence disposé notamment sur des affiches ou billets d'entrée ou des brochures, certains droits ou des unités peuvent être transférées dans la carte à puce à puce et donc bénéficier d'actions de promotions, etc.

La fonction NFC permet des échanges entre deux lecteurs SCR dotés de moyens d'interface homme/machine. La fonctionnalité NFC peut également améliorer des sessions de jeu comme pour la fonction d'interface duale. La puce NFC peut résider dans le module de carte à puce (module hybride) et alimentée par piles, batterie; Alternativement, la puce NFC peut être logée dans le lecteur SCR et adressée par carte à puce via connexion SWP. L'antenne peut être soit située dans la carte à puce soit dans le lecteur SCR.

Le cas échéant le dispositif peut comprendre une interface Bluetooth 15; cela lui permet d'assurer des fonctions similaires à une interface NFC (localisation, collecte d'information...) ou de communiquer avec l'ordinateur 11.

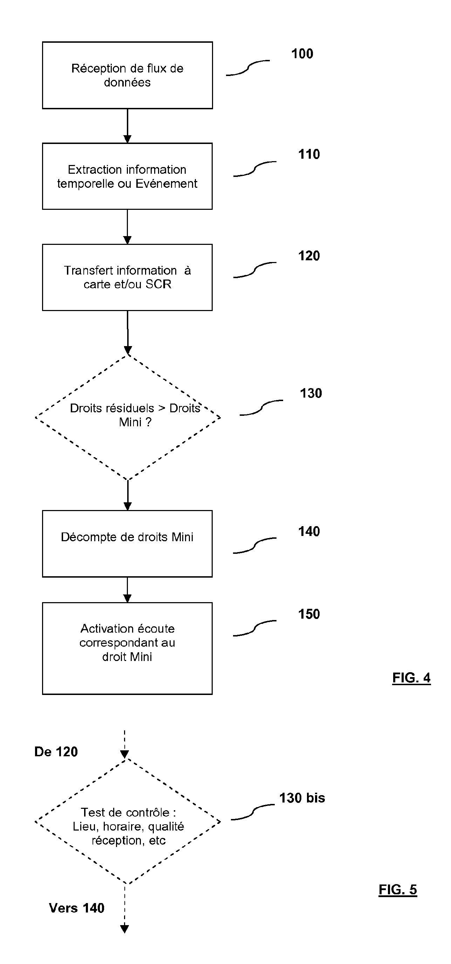

Le procédé est maintenant décrit en relation avec la figure 4 reprenant des étapes d'un exemple de mise en oeuvre et des moyens du dispositif illustré à la figure 1.

A l'étape 100, le procédé comporte une étape de réception de données puis de contrôle de la réception des données et/ou de l'accès à ces données pour permettre ou autoriser un porteur du dispositif, d'accéder à ces données diffusées. Dans l'exemple préféré, l'étape 100 est effectuée à l'aide de moyens de contrôle des droits d'accès à ces données comme expliquée ultérieurement. Ces moyens comprennent par exemple une puce de circuit intégré 7. La puce 7 peut être logée directement dans le récepteur radio ou contenue dans une carte à puce ou module associé en relation avec le récepteur.

Selon une caractéristique de l'invention, les données reçues comprennent une information temporelle et/ou relative à un événement qui est utilisée pour gérer un contrôle des droits d'accès. Plus précisément, le contrôle s'effectue en fonction de cette information.

Dans l'exemple, l'information temporelle est une information comportant l'heure précise locale qui est véhiculée parmi les données radiodiffusées grâce au système RDS. La figure 2 illustre, un champ de données prévu pour contenir une information temporelle IT parmi un flux de données émis puis reçu.

A l'étape 110, l'information est extraite du flux de données par les moyens récepteur µRDS puis communiquée à un microcontrôleur 6 dans la puce 7 pour mettre à jour des moyens de décompte de durée, notamment un compteur de durée associée à une horloge interne ou externe. Le cas échéant, des pulses sont émis du récepteur µRDS vers la puce ou d'un émetteur E1 vers la puce 7 à travers le récepteur; puis un décompte d'unités est effectué dans la puce à chaque pulsation ou période. Cela peut constituer un moyen simple pour décompter des unités ou le temps restant.

La carte contient par exemple un abonnement correspondant à un nombre déterminé d'heures de réception autorisée. Plutôt que de mettre en fonctionnement un compteur interne de la carte dès sa mise sous tension, dans le récepteur (ou lecteur) comme dans l'art antérieur, une information de temps ou durée est transmise à la carte à l'étape 110, afin d'effectuer le décompte en fonction de cette information à l'étape 140. Si par exemple, une émission est transmise de 18 h à 19h, l'horloge interne ou un compteur de la carte est mise à jour, notamment avant ou pendant l'émission; Des droits d'accès correspondant à une heure d'écoute seront ensuite décomptés précisément d'un crédit de durée.

Alternativement, l'invention peut prévoir de comptabiliser le temps de mise sous tension uniquement pendant un créneau horaire correspondant à une période de diffusion. Alternativement aussi, une information IT indiquant l'heure de début et heure de fin peut être transmise à la carte qui effectue le décompte elle même par différence.

Deux applications distinctes sont imaginées : le système de paiement à la demande "pay per use" ou l'utilisateur peut consommer à sa guise jusqu'à une limite d'un forfait payé et un abonnement annuel ou il peut consommer autant que qu'il souhaite mais pour une saison donnée, une période donnée.

Selon un autre mode de mise en oeuvre, l'information peut correspondre à un événement IE (figure 3); il peut être tout signal représentatif d'un début de l'émission (un bip, un code). L'information IE peut être transmise de manière répétée ou périodique pour indiquer à la carte ce qu'il convient de décompter en fonction de ces événements. L'événement peut représenter un bip de période ou le nom d'une émission liée à un événement quelconque, sportif, théâtre, concert, le nom de l'évènement, etc.

L'abonnement ou droits d'un utilisateur peut consister en un crédit d'un nombre d'événements quels qu'ils soient.

Alternativement, la réception d'un événement peut déclencher une horloge et compteur associé dans la puce 7, notamment pendant la durée de l'émission au plus. Ainsi, à la fin de l'émission, un oubli de la carte dans le lecteur ne décrémente pas le crédit détenu par un porteur.

Le cas échéant, le procédé dans l'exemple peut comprendre une étape 130 de test P1 consistant à vérifier que les droits restants sont supérieurs à un droit minimum. Par exemple, le test vérifie s'il subsiste 5 mn, une heure d'écoute ou la durée de l'émission pour, le cas échéant décompter à l'avance ce droit correspondant. Le droit peut être décompté également à la fin de la complète réception des données.

Alternativement à l'étape 130 bis, la puce procède à un test ou diagnostic prévu par un programme P3 permettant de sélectionner ou autoriser ou vérifier le bon déroulement d'une réception. Comme mentionné précédemment, la carte permet d'éviter des erreurs de manipulation, erreur dans l'espace dans lequel se trouve le porteur, erreur d'adéquation de paramètres entre eux entre le lieu et/ou la fréquence et/ou l'horaire et/ou l'événement nécessaire à une bonne réception d'une émission.

Dans un exemple, la puce effectue une comparaison avec une information de sélection d'une fréquence chargée par une borne, puis information de localisation transmise par un autre tag local, notamment dans une salle d'écoute ou de projection, conférence, puis de contrôle de l'horaire de réception ou de déroulement d'un événement. Le décompte s'effectue si la réception s'effectue à la bonne heure ou plage horaire et dans la bonne salle. Ainsi, le dispositif reçoit plusieurs paramètres comme une information temporelle via un canal RDS, puis une information de lieu via un canal NFC ou Bluetooth ou autre puis le cas échéant une information concernant le nom de l'évènement. Si les trois informations sont en adéquation suite à un ou des tests du programme P3 alors, le décompte peut intervenir. Une étape de test de P3 peut consister à comparer les trois paramètres par rapport à des données de droits relatives à l'évènement stocké en mémoire. Par exemple, les droits peuvent comprendre 10 heures d'écoute pour assister à 15 conférences dans 5 numéros de salles prédéterminées.

Ainsi, l'invention permet de prémunir l'utilisateur contre un décompte non opportun ou qui n'est pas réalisé à bon escient. Il offre une garantie à l'utilisateur contre une erreur, une omission, une mauvaise utilisation l'utilisation de l'appareil.

Ceci permet principalement d'éviter d'oublier la carte dans le lecteur à la fin de l'évènement et de voir ainsi ses unités décomptés et les piles de l'appareil SCR déchargées. Cela évite aussi que les enfants de l'utilisateur jouant avec le SCR ne le décharge ou consomment des unités.

Un interrupteur ON/OFF peut éviter une situation de consommation involontaire (unités et piles) si la carte reste insérée. Par contre, la garantie intervient notamment quand la réception du signal ne correspond pas à l'évènement visé. Un sponsor de l'évènement pourra être écouté « gratuitement » hors de la période de l'évènement, mais verra les unités décomptées au cours de l'évènement. De même, on peu avoir une période d'écoute en clair puis codée.

A la fin de l'émission RDS, une information IE de fin de transmission peut être transmise au dispositif pour être interprétée par la carte comme information destinée à désactiver les haut-parleurs et/ou à stopper un décompte. Alternativement, la carte compte une durée et transmet une commande de désactivation au microcontrôleur 6 à la fin de la durée.

A l'étape 150, le procédé comporte une activation / autorisation de l'écoute (ou autre accès à des données). Dans un exemple, la carte peut transmettre un signal d'activation notamment au contrôleur du dispositif, voire la puce RDS pour activer les hauts parleurs (voire une interface visuelle de dispositif avec l'utilisateur).

D'autre part, selon une caractéristique avantageuse, le procédé peut comprendre une étape de chargement d'information(s) complémentaire(s) (ICn) en rapport aux données à recevoir. L'information peut par exemple, comprendre une indication de fréquence pour la réception des données, un ensemble de données complémentaires aux données à recevoir (itinéraire, plan, règles d'un jeu, bonus, questions, sous-programme, partie de code, bande son, code couleur, etc.).

L'application prévue par l'invention consiste à disposer d'une information, celle-ci étant notamment chargée dans une carte à puce ou chargée via une borne externe, lue sur une étiquette électronique (tag) ou fournie par un lecteur ou terminal externe. L'information peut être transmise par un téléphone mobile notamment par voie NFC, Bluetooth via les moyens 13 ou 15.

L'information peut être disponible sous forme de code barres ou équivalent, et lu par un système optique adéquat.

De préférence, un chargement d'information s'effectue par une interface de courte ou moyenne portée, par exemple de type NFC, Bluetooth, etc. A cet effet, le récepteur radio comporte une interface logique et matérielle supplémentaire correspondante ou moyens de communication correspondante.

Dans l'exemple, dans un musée, un utilisateur approche son dispositif d'un moyen émetteur radiofréquence 16 selon les normes ISO 14443 ou 15... d'un point émetteur 17 de l'information (Conférence 1) comportant par exemple une affiche, un panneau, ou équivalent, doté d'un ou plusieurs tags 16, 17 correspondant chacun à une langue (GB, FR) et fréquence de réception.

L'information ici est une fréquence (ou un code relatif à une fréquence) pour écouter une conférence 1 en anglais (GB), chargée par le dispositif et utilisé pour caler la radio dessus de manière à recevoir des commentaires relatifs à l'endroit associé à l'information. L'information complémentaire peut être aussi une clé de déchiffrement permettant de déchiffrer les données reçues. On vise de préférence des données diffusées en numérique (équivalent mTV) avec carte à puce servant de décodeur avec une radio numérique.

Par contre la donnée reçue, type clé, pourrait être utilisée lors d'une connexion à un site internet par exemple, pour déverrouiller des accès sécurisés, et uniquement accessibles aux auditeurs présents lors de l'évènement. Par exemple l'accès à des photos prises lors de l'évènement et qui sont cryptées ou altérées par un marquage. L'information complémentaire peut passer ou non par la puce. La puce peut intégrer l'information complémentaire (ICn) dans un test ou diagnostic (Pn), le cas échéant avec d'autres paramètres de contrôle, pour permettre d'accorder ou non l'accès à des données reçues ou sélectionner une émission ou fréquence adéquate.

Dans une application conférence, des tags sont associés à des langues différentes, l'utilisateur approche son lecteur du tag correspondant à la traduction dans une langue qu'il souhaite entendre et une fréquence est chargée dans le récepteur radio et/ou carte à puce. La fréquence chargée est utilisée pour ajuster la radio de manière à recevoir la bonne traduction. Alternativement, plutôt que de charger une fréquence, l'invention prévoit de charger directement le contenu de l'émission, notamment dans la puce 7 ou moyens de mémorisation (carte mémoire de masse SD, flash...) contrôlée par la puce 7. Le chargement peut être local sur l'instant ou différé notamment par internet ou via une borne quelconque.

Selon une caractéristique ou application de l'invention, l'information complémentaire peut comprendre une indication de localisation d'un lieu (IC1) de chargement et une indication de fréquence (IC2), de manière à recevoir des données relatives au lieu.

L'information chargée peut comprendre un plan du lieu. Ainsi, dans l'exemple, un utilisateur reçoit un plan d'une foire ou salon, une ville, un supermarché, un centre commercial et une localisation de points de chargement de données dans le lieu. De préférence, l'exemple vise ici un dispositif récepteur SCR numérique avec moyens IHM et d'affichage.

L'utilisateur peut localiser les points de chargement sur le plan et se rendre à ces points pour y télécharger des données complémentaires notamment une fréquence ou moyens (clé, code ...;) via par exemple une communication NFC. A leur tour ces données collectées peuvent permettre d'accéder à une émission.

L'application prévue par l'invention consiste notamment à un jeu de piste ou itinéraire à faire suivre par un utilisateur, pour découvrir des stands d'une foire, exposition, un parcours fléché, un rallye, etc. A chaque point indiqué, l'utilisateur charge d'autres données et/ou capte une fréquence de rayon d'action limitée au lieu. Les données chargées peuvent être des images et les données reçues par radio, des commentaires sur les photos, images chargées. De préférence, l'exemple vise ici un dispositif récepteur SCR numérique avec moyens IHM et d'affichage.

Selon une autre application, un utilisateur recherche un point dans un centre commercial; A l'entrée du centre, une borne charge un plan du centre commercial ou un plan des rayons et produits en vente, ainsi qu'une liste.

En sélectionnant la référence du produit recherché dans la liste (ou tapant sa référence sur un clavier), le récepteur peut indiquer sur le plan la localisation du produit et une indication de parcours par rapport à l'endroit où se trouve l'utilisateur.

Le cas échéant, un système de radioguidage local détecte la position et direction du récepteur (notamment à l'aide d'un émetteur compris dans le récepteur radio) et un parcours guidé audio ou vidéo est établi jusqu'au produit. Le système local de radio guidage guide l'utilisateur notamment à la manière d'un système GPS. Un ou plusieurs émetteur (s) radios sont utilisés pour localiser l'utilisateur notamment par triangulation. De préférence, l'exemple vise ici un dispositif récepteur SCR numérique avec moyens IHM et d'affichage.

Selon une autre caractéristique ou application de l'invention, l'information chargée peut comprendre des points de bonus, gratifications ou équivalents et/ou déclenche d'autres droits d'accès. Dans l'exemple, un utilisateur se rend à différents endroits selon un itinéraire prédéfini; l'itinéraire peut par exemple comprendre des informations sur des produits ou services nouveaux que l'on souhaite porter à la connaissance d'un utilisateur.

Pour inciter à aller sur ces lieux différents, une étiquette électronique ou borne y est installée à chaque lieu. Puis cette borne charge des informations complémentaires (ICn), notamment des bonus et/ou une indication de la localisation d'une borne suivante. Cette borne peut émettre notamment des droits pour l'accès à une fréquence radio permettant de recevoir d'autres informations essentielles. Au moins une application logicielle parmi P1, P2 ou P3, est prévue dans le microcircuit 7, et peut concerner un jeu de piste ou itinéraire de publicité notamment des visites d'appartement témoin, etc.

Pour le chargement d'information complémentaire (ICn), l'invention peut prévoir toute interface de communication et en particulier une interface ou connecteur USB. Le connecteur permet notamment à l'utilisateur de télécharger notamment sur un réseau tel que internet ou site marchand des données complémentaires (ICn), droits d'accès, logiciels, clés de déchiffrement etc.

Le connecteur USB permet aussi de lire une puce de carte à puce comprise dans le récepteur radio. Il permet notamment de télécharger des droits par internet tels qu'un abonnement, ou recharger des points dans la carte ou dans une puce de sécurité stockant ces droits.

Dans une application, le dispositif de l'invention comprend un modem radio et une interface notamment de type USB ou "PCMCIA, Express card" avec un afficheur ou écran ou système audio et/ou vidéo.

Ainsi, grâce à l'invention, des droits sont décomptés de manière plus fiable, sans risque pour l'utilisateur de décompter plus que nécessaire.

Dans une variante ultime, tout ou partie des fonctions du dispositif SCR, notamment les fonctions de réception RDS ou interface RF, NFC, ou Bluetooth, sont intégrés dans la carte à puce 7a ou équivalent.

## Revendications

1. Procédé de communication radiofréquence de données, dans lequel la réception et/ou l'accès à ces données est contrôlée par des moyens de contrôle comprenant un microcircuit électronique en fonction de droits d'accès,
- **caractérisé en ce que** les données transmises comprennent une information temporelle (IT) et/ou relative à un événement (IE),
- et **en ce que** les droits d'accès (Da) sont contrôlés en fonction de cette information temporelle et/ou relative à un événement.

2. Procédé selon la revendication précédente, **caractérisé en ce qu'**il comprend une étape de chargement d'information complémentaire (IC1, IC2,... ICn) liée aux données à recevoir.

3. Procédé selon la revendication précédente, **caractérisé en ce que** le chargement d'information complémentaire s'effectue par une interface de courte ou moyenne portée (13).

4. Procédé selon l'une des revendications 1 à 2, **caractérisé en ce que** le l'information complémentaire (ICn) comprend une indication de fréquence de réception des données.

5. Procédé selon la revendication précédente, **caractérisé en ce que** le l'information complémentaire comprend une indication de localisation d'un lieu de chargement et/ou une indication de fréquence (IC2) de manière à recevoir des données relatives au lieu.

6. Procédé selon la revendication précédente, **caractérisé en ce que** l'information complémentaire (ICn) chargée comprend un plan du lieu.

7. Procédé selon l'une quelconque des revendications 2 à 5, **caractérisé en ce que** l'information complémentaire (ICn) chargée comprend des points de bonus, gratifications ou équivalents et/ou déclenche d'autres droits d'accès.

8. Procédé selon la revendication précédente, **caractérisé en ce que** le chargement d'information s'effectue par interface USB.

9. Procédé selon l'une quelconque des revendications précédentes, **caractérisé en ce que** le contrôle comprend préalablement à un décompte de droits, la mise en oeuvre d'au moins une étape ou programme P3 de vérification des conditions de la réception par un test d'adéquation entre eux, de certains paramètres relatifs à des données à recevoir, notamment l'horaire, le lieu, la fréquence.

10. Dispositif de contrôle de réception radiofréquence de données (7, 7a), comprenant des moyens de contrôle de la réception et/ou l'accès à ces données en fonction de droits d'accès, lesdits moyens de contrôle comprenant un microcircuit électronique (7),
**caractérisé en ce que** les données à contrôler comprennent une information temporelle (IT) et/ou relative à un événement (IE), et **en ce que** lesdits moyens de contrôle des droits d'accès (Da) autorisent l'accès aux données par un utilisateur en se référant à cette information temporelle et/ou relative à un événement.

11. Dispositif de réception de données radiofréquence (SCR) comportant le dispositif de contrôle (7, 7a) selon la revendication précédente et/ou apte à mettre en oeuvre le procédé selon l'une quelconque des revendications 1 à 8.
